# EUROPEAN PATENT APPLICATION

(11) **EP 4 079 199 A1**
(43) Date of publication of application: **26.10.2022**
(21) Application number: 21186686.8
(22) Date of filing: 20.07.2021
(51) Int. Cl.: A47J 37/06

(54) **AN AIR FRYER**

(30) Priority: 21.04.2021 CN 202120824326 U
(71) Applicant: Yang, Zhenqiao, Wenzhou, Zhejiang 325800 (CN)
(72) Inventor: Yang, Zhenqiao, Wenzhou, Zhejiang 325800 (CN)
(74) Representative: Wang, Bo

(57) **Abstract**

The present utility model discloses an air fryer, which comprises a housing and at least two cooking chambers installed inside the housing; every cooking chamber is internally equipped with an electric heating device, every cooking chamber is fixed with an independent motor frame, on the top of every motor frame is fixed with a motor; a heat insulating cavity is formed between the motor frame and the cooking chamber, the output shaft of every motor passes downward through the corresponding heat insulating cavity and extends into the corresponding cooking chamber, the output shaft of motor is connected with the first fan blade inside the cooking chamber and the first fan blade is located above the electric heating device. With respect to this air fryer, every cooking chamber is internally arranged with an independent heat insulating cavity, to be specific, the heat dissipating upward from the cooking chamber enters the corresponding heat insulating cavity and does not come together between the heat insulating cavities and thus prevents the normal operation of the air fryer from being affected; moreover, one motor, one motor frame, one thermally-insulated shroud, the first fan blade and the second fan blade are preassembled into a whole and then installed into the housing as a whole, not only optimizing the installation process but also improving the production efficiency.

## Description

### Technical Field

The present utility model relates to the technical field of food cooking equipment, in particular relates to an air fryer.

### Background Art

Any existing air fry is equipped with one cooking chamber, so the user only can cook one kind of food when using it. In order to improve the cooking efficiency, some air fryers possess more than one cooking chambers wherein every cooking chamber possesses one independent electric heating device and thus can cook different kinds of food at the same time. However, such air fryers with more than one cooking chambers use the cooking chambers at the same time, and as a result, heat gathers above the cooking chambers, leads to temperature rise above the cooking chambers and then greatly affects normal operation of such air fryers, moreover, the overall arrangement of multiple cooking chambers makes the overall installation of air fryer become complicated and lowers the production efficiency.

### Summary of Utility Model

The purpose of the present utility model is to provide an air fryer with cooking chambers corresponding to independent heat insulating cavities one to one and high production efficiency.

The purpose of the present utility model is realized as follows:
An air fryer comprises a housing and at least two cooking chambers installed inside the housing; every cooking chamber is internally equipped with one electric heating device, every cooking chamber is fixed with an independent motor frame, on the top of every motor frame is fixed with a motor; a heat insulating cavity is formed between the motor frame and the cooking chamber, the output shaft of every motor passes downward through the corresponding heat insulating cavity and extends into the corresponding cooking chamber, the output shaft of motor is connected with the first fan blade inside the cooking chamber and the first fan blade is located above the electric heating device. With respect to this air fryer, every cooking chamber is internally arranged with an independent heat insulating cavity, to be specific, the heat dissipating upward from the cooking chamber enters the corresponding heat insulating cavity and does not come together between the heat insulating cavities and thus prevents the normal operation of the air fryer from being affected; moreover, one motor is preassembled into one motor frame and then installed into the housing as a whole, not only optimizing the installation process but also improving the production efficiency.

The above technical solution also can be further perfected as follows.

As a further solution of the present utility model that: inside the housing are arranged with two adjacent cooking chambers, an isolation wall is installed between the two cooking chambers, on the top of each of the two cooking chambers is fixed with a motor frame, the side of the motor frame adjacent to the isolation wall extends out the connecting edge, on the connecting edge is arranged with recesses and projections, the connecting edges of the two motor frames are located on both sides of the top of the isolation wall, the recesses and projections of the connecting edge on the side of the isolation wall match the projections and recesses of the connecting edge on the other side, and the projections of every connecting edge are connected and fixed together with the isolation wall via connecting pieces. The two motor frames match each other via the recesses and projections and thus realize position-fixed assembly, and both the motor frames are connected with the isolation wall to form mutually independent heat insulating cavities.

As a further solution of the present utility model that: the connecting pieces are bolts which pass through the projections to be connected with the isolation wall and the nuts of the bolts are pressed tightly with the recesses corresponding to the projections. In this way, the number of mounting bolts can reduce by half but can realize same fixing effect and improve the production efficiency.

As a further solution of the present utility model that: the projections are convex and the recesses are concave. The projections and recesses can be machined easily and the nuts of mounting bolts can fully press the recesses matching the projections.

As a further solution of the present utility model that: the top surfaces of the two motor frames inside the housing and the inner top wall of the housing form an electric chamber, on the top surface of the housing is arranged with the upper air-in duct which is connected with the electric chamber; on the top surface of the motor frame is arranged with a plurality of heat dissipating orifices which connect the electric chamber and the heat insulating cavity; on the reverse side of the housing is arranged with two air-out ducts, and each of the air-out ducts is connected with the corresponding heat insulating cavity; the output shafts of the motors are connected with the second fan blades in the heat insulating cavities, the second fan blades discharge the heat in the heat insulating cavities from the air-out ducts so that the cold air enters the heat insulating cavities from the upper air-in duct via the electric chamber and the heat dissipating orifices. The second fan blades discharge the hot air in the heat insulating cavities from the air-out ducts so that the heat insulating cavities are under negative pressure and the cold air is sucked into the electric chamber via the upper air-in duct, the cold air carries away the heat in the electric chamber and then enters the corresponding heat insulating cavity via the corresponding heat dissipating holes; such air ducts are arranged reasonably so that any working cooking chamber can dissipate heat for the electric chamber and the corresponding heat insulating cavities.

As a further solution of the present utility model that: at the bottom of the housing is arranged with the lower air-in duct which extends upward into the isolation wall to be connected with the electric chamber; on the bottom surface of the housing is arranged with the air inlet; a heat insulating space exists between the cooking chamber and the housing; the lower air-in duct is connected with the heat insulating space, the lower air-in duct is connected with the air inlet via the heat insulating space; on the motor frame is arranged with a plurality of orifices directly leading to the heat insulating space and the electric chamber. The cold air enters the heat insulating space via the air inlet on the bottom surface of the housing, is divided into two airflows from the heat insulating space, one enters the electric chamber via the lower air-in duct and the other one enters the electric chamber via orifices and thus carries away the heat in the cooking chamber dissipating toward surrounding space and thus prevents the temperature of the housing from scalding hands.

As a further solution of the present utility model that: on the reverse side of the housing is arranged with two hot air ducts, each of which is connected with one cooking chambers. The hot air duct can discharge the hot air inside the cooking chambers.

As a further solution of the present utility model that: on the reverse side of the housing is also arranged with two mounting holes which are arranged inside with two air-out devices, on the top of every air-out device is arranged with an air-out duct and at the bottom of every air-out device is arranged with a hot air duct wherein the air-out duct and the hot air duct are mutually independent. The air-out duct and the hot air duct are integrated; therefore, the arrangement of air ducts is reasonable, not only simplifying the process but also improving the production efficiency.

As a further solution of the present utility model that: one thermally-insulated shroud isolates every cooking chamber from the corresponding heat insulating cavity; the inner end of the air-out device simultaneously supports the motor frame and the thermally-insulated shroud so that the air-out duct (51) is connected with the heat insulating cavity (20), the hot air duct (52) and the cooking chamber (11), the top of the air-out device (5) is buckled and connected with the motor frame (2) and the bottom of the air-out device (5) mutually limits the housing (1). The installation of air-out devices is simple and easy.

The air fryer in accordance with Claim 9, wherein the electric heating device is an electric heating tube which is fixed onto the thermally-insulated shroud, two wiring terminals of the electric heating tube pass upward through the motor frame and extend into the electric chamber; the middle of the electric heating tube is coiled, the side of the thermally-insulated shroud away from the wiring terminals of the electric heating tube is arranged with fixed hooks which support the electric heating tube. The two ends of electric heating tube are fixed and can be used safety and reliably.

The present utility model has the beneficial effects that:
(1) With respect to this air fryer, every cooking chamber is internally arranged with an independent heat insulating cavity, to be specific, the heat dissipating upward from the cooking chamber enters the corresponding heat insulating cavity and does not come together between the heat insulating cavities and thus prevents the normal operation of the air fryer from being affected; moreover, one motor, one motor frame, one thermally-insulated shroud, one first fan blade and one second fan blade are preassembled into a whole and then installed into the housing as a whole, not only optimizing the installation process but also improving the production efficiency.
   Next, the two motor frames match each other via the recesses and projections and thus realize position-fixed assembly, and both the motor frames are connected with the isolation wall to form mutually independent heat insulating cavities. The projections are connected via bolts and bolt threads of isolation wall and then tightly press the recesses corresponding to the corresponding projections; in this way, the number of mounting bolts can reduce by half but can realize same fixing effect and improve the production efficiency. The arched projections and recesses can be machined easily and the nuts of mounting bolts can fully press the recesses matching the projections.
(3) Next, the second fan blades discharge the hot air in the heat insulating cavities from the air-out ducts so that the heat insulating cavities are under negative pressure and the cold air is sucked into the electric chamber from the top of the housing via the upper air-in duct and then is sucked into the electric chamber from the bottom of the housing via the lower heating insulating space and the lower air-in duct. The cold air enters the heat insulating space via the air inlet on the bottom surface of the housing, is divided into two airflows from the heat insulating space, one enters the electric chamber via the lower air-in duct and the other one enters the electric chamber via orifices and thus carries away the heat in the cooking chamber dissipating toward surrounding space and thus prevents the temperature of the housing from scalding hands. The cold air carries away the heat in the electric chamber and then enters the corresponding heat insulating cavity via the corresponding heat dissipating holes; such air ducts are arranged reasonably so that any working cooking chamber can dissipate heat for the electric chamber and the corresponding heat insulating cavities. The hot air duct can discharge the hot air inside the cooking chambers.
   Then, the air-out duct and the hot air duct are integrated; therefore, the arrangement of air ducts is reasonable, not only simplifying the process but also improving the production efficiency. The air-out devices are buckled and connected with the motor frames and the housing; therefore, the installation is simple and easy.
(5) In the end, one end of the electric heating tube is fixed by the motor frame and the other end is limited and fixed by the fixing hooks; in other words, two ends of the electric heating tube are fixed and thus can be used safely and reliably.

### BRIEF DESCRIPTION OF DRAWINGS

FIG. 1 is a stereoscopic diagram of Embodiment I.
FIG. 2 is a stereoscopic diagram of Embodiment I based on another angle of view.
FIG. 3 is a schematic diagram of the breakdown structure of Embodiment I.
FIG. 4 is a top view of Embodiment I.
FIG. 5 is a schematic diagram of the sectional structure in the A-A direction in FIG. 4.
FIG. 6 is a schematic diagram of the sectional structure in the B-B direction in FIG. 4.
FIG. 7 is a top view of motor frame assembly in Embodiment I.
FIG. 8 is a schematic structural diagram of the tops of cooking chambers in Embodiment I.
FIG. 9 is a schematic diagram of the breakdown structure in FIG. 8.

### DETAILED EMBODIMENTS

The present utility model will be described more clearly and fully in conjunction with the accompanying drawings and embodiments.

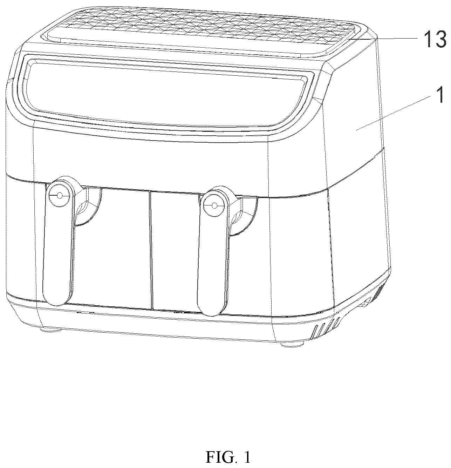

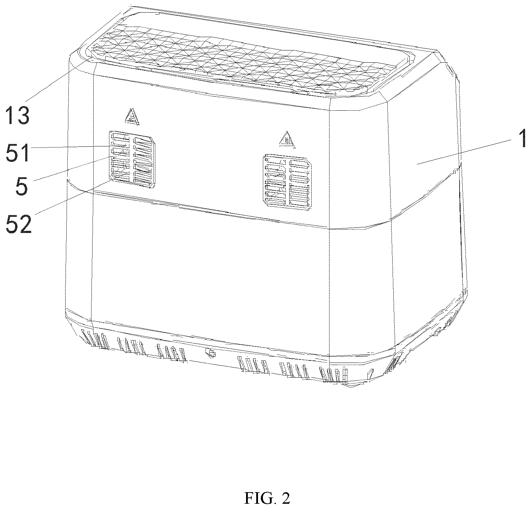

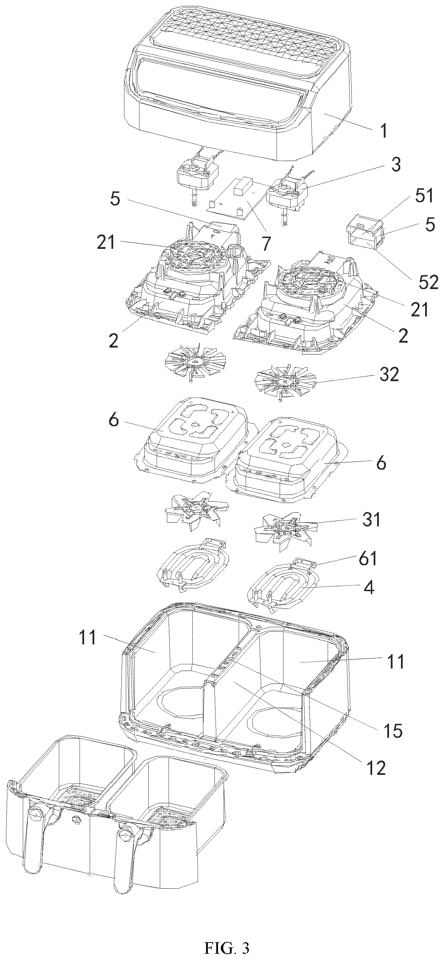

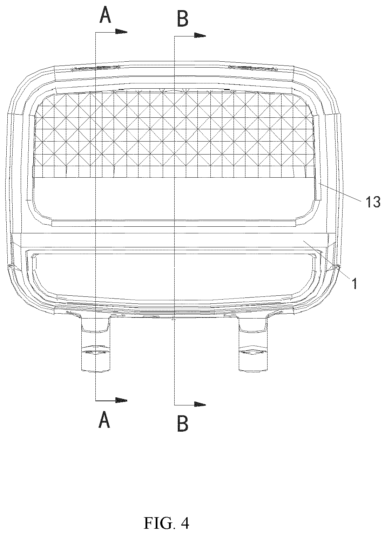

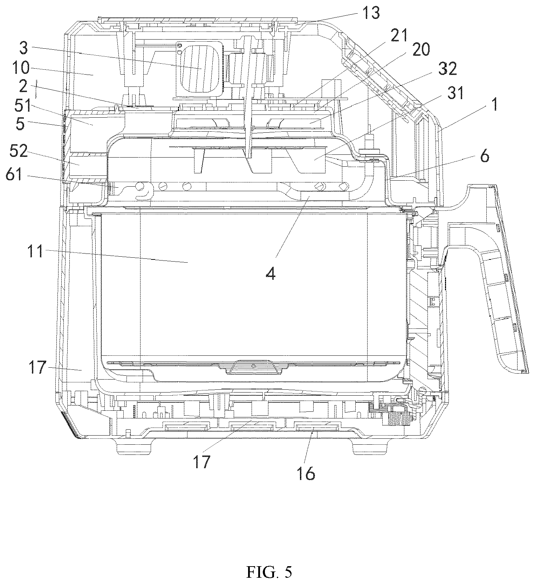

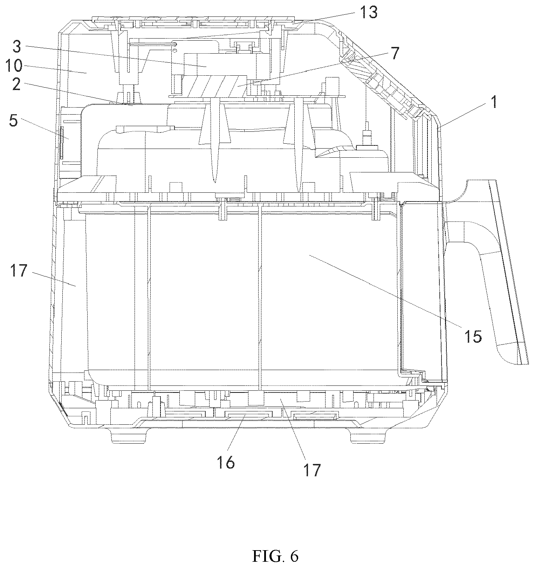

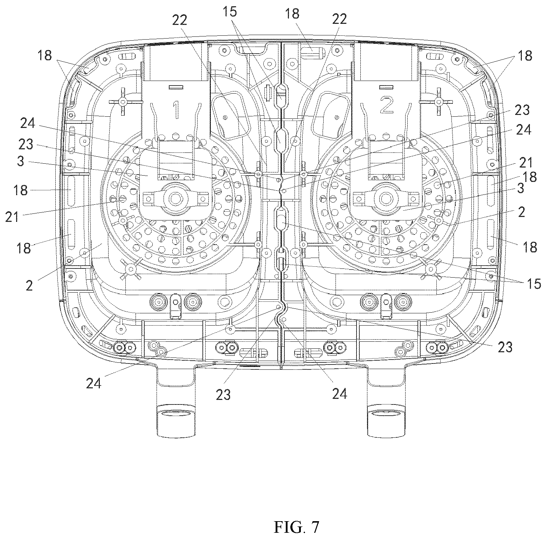

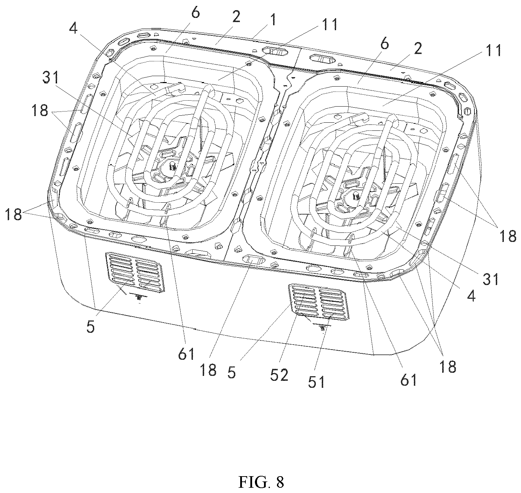

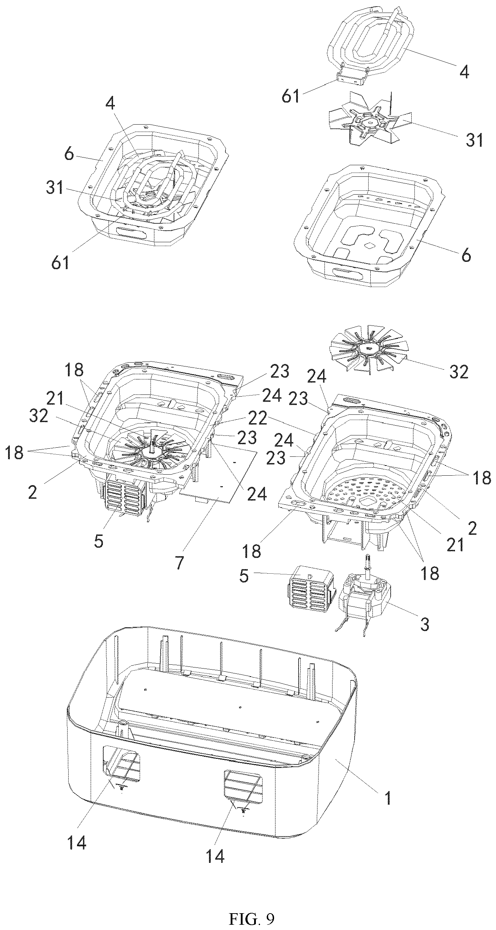

In embodiment I, as shown from Fig. 1 to Fig. 9, an air fryer comprises a housing (1) and at least two cooking chambers (11) installed in the housing (1) wherein an isolation wall (12) between the two cooking chambers (11), every cooking chamber (11) is fixed with an independent motor frame (2), the top of every motor frame (2) is fixed with a motor (3) and a heat insulating cavity (20) is formed between the motor frame (2) and the cooking chamber (11). The electric chamber (10) is formed between the top surfaces of the two motor frames (2) and the inner top wall of the housing (1).

On the top surface of the housing (1) is arranged with the upper air-in duct (13) which is connected with the electric chamber (10), on the top surface of the motor frame (2) is arranged with a plurality of heat dissipating orifices (21) which connect the electric chamber (10) and the heat insulating cavity (20). On the reverse side of the housing (1) is arranged with two air-out ducts, each of which is connected with the corresponding heat insulating cavity (20). At the bottom of the housing (1) is arranged with the lower air-in duct (15) which extends upward into the isolation wall (12) to be connected with the electric chamber (10); on the bottom surface of the housing (1) is arranged with the air inlet (16); a heat insulating space (17) exists between the cooking chamber (11) and the housing (1); the lower air-in duct (15) is connected with the heat insulating space (17), the lower air-in duct (15) is connected with the air inlet (16) via the heat insulating space (17). On the reverse side of the housing (1) is arranged with two hot air ducts (52), each of which is connected with one cooking chambers (11).

One electric heating device (4) is arranged inside every cooking chamber (11); the output shaft of every motor (3) passes downward through the corresponding heat insulating cavity (20) and extends into the corresponding cooking chamber (11), the output shaft of motor (3) is connected with the first fan blade (31) inside the cooking chamber (11) and the first fan blade (31) is located above the electric heating device (4), and the output shaft of the motor (3) is connected with the second fan blade (32) inside the heat insulating cavity (20).

Every cooking chamber (11) is isolated from the corresponding heat insulating cavity (20) via one thermally-insulated shroud (6); preferably, the thermally-insulated shroud (6) is embedded in the bottom surface of the motor frame (2). The electric heating device (4) is an electric heating tube which is sealed and fixed onto the thermally-insulated shroud (6), two wiring terminals of the electric heating tube pass upward through the thermally-insulated shroud (6) and the motor frame (2) and then extend into the electric chamber (10); the middle of the electric heating tube is coiled, the side of the thermally-insulated shroud (6) away from the wiring terminals of the electric heating tube is arranged with fixed hooks (61) which support the electric heating tube wherein the electric heating device (4) is fixed securely. Moreover, on the motor frame (2) is also arranged with a plurality of orifices directly leading to the heat insulating space (17) and the electric chamber (10).

On the reverse side of the housing (1) is also arranged with two mounting holes (14) which are arranged inside with two air-out devices (5), on the top of every air-out device (5) is arranged with an air-out duct (51) and at the bottom of every air-out device (5) is arranged with a hot air duct (52) wherein the air-out duct (51) and the hot air duct (52) are mutually independent. The inner ends of the two air-out devices (5) simultaneously support the motor frame (2) and the thermally-insulated shroud (6) so that the air-out duct (51) is connected with the heat insulating cavity (20), the hot air duct (52) is connected with the cooking chamber (11), the top of the air-out device (5) is buckled and connected with the motor frame (2) and the bottom of the air-out device (5) mutually limits the housing (1).

In this embodiment, the motors (3) are preassembled onto the corresponding motor frames (2), on the output shafts of the motors (3) are installed with the second fan blades (32), and then the two motor frames (2) as well as the corresponding motors (3) and second fan blades (32) are installed onto one thermally-insulated shroud (6) as a whole. The side of the motor frame (2) adjacent to the isolation wall (12) extends out the connecting edge (22), on the connecting edge (22) is arranged with arched recesses (23) and arched projections (24), the connecting edges (22) of the two motor frames (2) are located on both sides of the top of the isolation wall (12); the recesses (23) and projections (24) of the connecting edge (22) on the side of the isolation wall (12) match the projections (24) and recesses (23) of the connecting edge (22) on the other side, and the projections (24) of every connecting edge (22) are connected and fixed together with the isolation wall (12) via connecting pieces (not shown). Preferably, the connecting pieces are bolts which pass through the projections (24) to be connected with the isolation wall (12) and the nuts of the bolts are pressed tightly with the recesses (23) corresponding to the projections (24). Such assembly process is simple and can improve the production efficiency.

When the air fryer in the present utility model is working, the electric heating devices (4) in the cooking chambers (11) will be working, the corresponding motors (3) will be also working; the motors (3) drive the first fan blades (31) and the second fan blades (32) to rotate; the rotation of the first fan blades (31) blows the air heated by the electric heating devices (4) downward so that the hot air is evenly distributed in the cooking chambers (11) and thus realizes food cooking and some air is discharged from the hot air ducts (52). Meanwhile, the rotation of the second fan blades (32) discharges the heat in the heat insulating cavities (20) via the air-out ducts (51), that is, discharges the heat transmitted upward by the cooking chambers (11) via the thermally-insulated shroud (6) under negative pressure so that the cold air enters the heat insulating cavities (20) via the electric chamber (10) and the heat dissipating orifices (21) from the upper air-in duct (13) and thus carries away the heat dissipated by the objects such as the motors (3) and the circuit board (7) in the electric chamber (10); meanwhile, the cold air also enters the heat insulating space (17) via the air inlet (16) on the bottom surface of the housing (1) and then is divided into two airflows in the heat insulating space (17) wherein one enters the electric chamber (10) via the lower air-in ducts (15) and the other one directly enters the electric chamber (10) via orifices (18), that is, carries away the heat in the cooking chambers (11) dissipating toward surrounding space (namely the heat in the heat insulating space (17)) and thus prevents the temperature of the housing (1) from scalding hands.

## Claims

1. An air fryer comprises a housing (1) and at least two cooking chambers (11) installed in the housing (1); every cooking chamber (11) is internally equipped with one electric heating device (4), every cooking chamber (11) is fixed with one independent motor frame (2), on the top of every motor frame (2) is fixed with a motor (3); a heat insulating cavity (20) is formed between the motor frame (2) and the cooking chamber (11), the output shaft of every motor (3) passes downward through the corresponding heat insulating cavity (20) and extends into the corresponding cooking chamber (11), the output shaft of motor (3) is connected with the first fan blade (31) inside the cooking chamber (11) and the first fan blade (31) is located above the electric heating device (4).

2. The air fryer in accordance with Claim 1, wherein inside the housing (1) are arranged with two adjacent cooking chambers (11), an isolation wall (12) is installed between the two cooking chambers (11), on the top of each of the two cooking chambers (11) is fixed with a motor frame (2), the side of the motor frame (2) adjacent to the isolation wall (12) extends out the connecting edge (22), on the connecting edge (22) is arranged with recesses (23) and projections (24), the connecting edges (22) of the two motor frames (2) are located on both sides of the top of the isolation wall (12), the recesses (23) and projections (24) of the connecting edge (22) on the side of the isolation wall (12) match the projections (24) and recesses (23) of the connecting edge (22) on the other side, and the projections (24) of every connecting edge (22) are connected and fixed together with the isolation wall (12) via connecting pieces.

3. The air fryer in accordance with Claim 2, wherein the connecting pieces are bolts which pass through the projections (24) to be connected with the isolation wall (12) and the nuts of the bolts are pressed tightly with the recesses (23) corresponding to the projections (24).

4. The air fryer in accordance with Claim 2 or 3, wherein the projections (24) are convex and the recesses (23) are concave.

5. The air fryer in accordance with Claim 2, wherein the top surfaces of the two motor frames (2) inside the housing (1) and the inner top wall of the housing (1) form one electric chamber (10), on the top surface of the housing (1) is arranged with the upper air-in duct (13) which is connected with the electric chamber (10); on the top surfaces of the motor frames (2) are arranged with a plurality of heat dissipating orifices which connect the electric chamber (10) and the heat insulating cavities (20); on the reverse side of the housing (1) is arranged with two air-out ducts (51), and each of the air-out ducts (51) is connected with the corresponding heat insulating cavity (20); the output shafts of the motors (3) are connected with the second fan blades (32) in the heat insulating cavities (20), the second fan blades (32) discharge the heat in the heat insulating cavities (20) from the air-out ducts (51) so that the cold air enters the heat insulating cavities (20) from the upper air-in duct (13) via the electric chamber (10) and the heat dissipating orifices (21).

6. The air fryer in accordance with Claim 5, wherein at the bottom of the housing (1) is arranged with the lower air-in duct (15) which extends upward into the isolation wall (12) to be connected with the electric chamber (10); on the bottom surface of the housing (1) is arranged with the air inlet (16); a heat insulating space (17) exists between the cooking chamber (11) and the housing (1); the lower air-in duct (15) is connected with the heat insulating space (17), the lower air-in duct (15) is connected with the air inlet (16) via the heat insulating space (17); on the motor frame (2) is arranged with a plurality of orifices (18) directly leading to the heat insulating space (17) and the electric chamber (10).

7. The air fryer in accordance with Claim 5, wherein on the reverse side of the housing (1) is arranged with two hot air ducts (52), each of which is connected with one cooking chambers (11).

8. The air fryer in accordance with Claim 7, wherein on the reverse side of the housing (1) is also arranged with two mounting holes (14) which are arranged inside with two air-out devices (5), on the top of the air-out device (5) is arranged with an air-out duct (51) and at the bottom of the air-out device (5) is arranged with a hot air duct (52) wherein the air-out duct (51) and the hot air duct (52) are mutually independent.

9. The air fryer in accordance with Claim 8, wherein one thermally-insulated shroud (6) isolates every cooking chamber (11) from the corresponding heat insulating cavity (20); the inner ends of the two air-out devices (5) simultaneously support the motor frame (2) and the thermally-insulated shroud (6) so that the air-out duct (51) is connected with the heat insulating cavity (20), the hot air duct (52) is connected with the cooking chamber (11), the top of the air-out device (5) is buckled and connected with the motor frame (2) and the bottom of the air-out device (5) mutually limits the housing (1).

10. The air fryer in accordance with Claim 9, wherein the electric heating devices (4) is electric heating tubes which are fixed onto the thermally-insulated shroud (6), two wiring terminals of every electric heating tube pass upward through the corresponding motor frame (2) and extend into the electric chamber (10); the middle of every electric heating tube is coiled, the side of the thermally-insulated shroud away from the wiring terminals of every electric heating tube is arranged with fixed hooks (61) which support the electric heating tube.
